**Europäisches Patentamt**

**European Patent Office**

**Office européen des brevets**

(19)

(11) Veröffentlichungsnummer : **0 538 235 A1**

# (12) EUROPÄISCHE PATENTANMELDUNG

(21) Anmeldenummer : **92890205.5**

(22) Anmeldetag : **25.09.92**

(51) Int. Cl.$^5$ : **G01N 9/00**

(30) Priorität : **14.10.91 AT 2041/91**

(43) Veröffentlichungstag der Anmeldung :
**21.04.93 Patentblatt 93/16**

(84) Benannte Vertragsstaaten :
**AT BE CH DE DK ES FR GB GR IE IT LI LU MC NL PT SE**

(71) Anmelder : **Leopold, Hans, O. Univ.-Prof. Dr.**
**Sonnleitenweg 17**
**A-8043 Graz (AT)**

(71) Anmelder : **Stabinger, Hans, Dr.**
**Peterstalstrasse 156**
**A-8042 Graz (AT)**

(72) Erfinder : **Leopold, Hans, O. Univ.-Prof. Dr.**
**Sonnleitenweg 17**
**A-8043 Graz (AT)**
Erfinder : **Stabinger, Hans, Dr.**
**Peterstalstrasse 156**
**A-8042 Graz (AT)**

(74) Vertreter : **Gibler, Ferdinand, Dipl.Ing. Dr. techn.**
**Dorotheergasse 7/14**
**A-1010 Wien (AT)**

(54) Vorrichtung zur Bestimmung der Dichte von Flüssigkeiten und Gasen aus der Periodendauer eines mit einem Präparat gefüllten Messschwingers.

(57) Vorrichtung zur Bestimmung der Dichte von Flüssigkeiten und Gasen aus der Periodendauer eines mit einem Präparat gefüllten Meßschwingers (1), zu dessen Anregung ein Erregerverstärker (7) vorgesehen ist, der den Meßschwinger (1) in seiner mechanischen Resonanzfrequenz über einen Wandler (5) und Erreger (4) anregt und der ein periodisches elektrisches Signal abgibt, welches in seiner Periode mit der Periode des Meßschwingers oder einem Vielfachen davon übereinstimmt. Um temperatur- und alterungsunabhängige Meßergebnisse zu ermöglichen, ist vorgesehen, daß ein Referenzschwinger (2) vorgesehen ist, der mit dem Meßschwinger (1) in thermischem Kontakt steht, wobei der Referenzschwinger (2) ebenfalls über einen Wandler (6) und Erreger (4) in seiner mechanischen Resonanzfrequenz anregbar ist und ein weiteres periodisches Signal abgibt, das in seiner Periode mit der Periode des Referenzschwingers (2) oder einem Vielfachen davon übereinstimmt.

EP 0 538 235 A1

Die Erfindung bezieht sich auf eine Vorrichtung zur Bestimmung der Dichte von Flüssigkeiten und Gasen aus der Periodendauer eines mit einem Präparat gefüllten Meßschwingers, zu dessen Anregung ein Erregerverstärker vorgesehen ist, der den Meßschwinger in seiner mechanischen Resonanzfrequenz über einen Wandler und Erreger anregt und der ein periodisches elektrisches Signal abgibt, welches in seiner Periode mit der Periode des Meßschwingers oder einem Vielfachen davon übereinstimmt.

Eine solche Vorrichtung wurde z.B. durch die AT-PS 356 943 bekannt. Voraussetzung für eine genaue Messung ist, daß die Schwingungsparameter während der Messung konstant bleiben. Dies ist jedoch in der Praxis nicht zu erwarten. So sind vor allem die elastischen Eigenschaften des Meßschwingers einer temperatur- und alterungsbedingten Änderung unterworfen, wodurch eine Drift der Eigenfrequenz auftritt. Besonders ausgeprägt tritt diese Drift nach einer großen Änderung der Temperatur des Meßschwingers auf. Bei genauen Messungen muß in einem solchen Fall mehrere Tage gewartet werden, bis sich das Verhalten des Meßschwingers wieder stabilisiert.

Ziel der Erfindung ist es, diese Nachteile zu vermeiden und eine Vorrichtung der eingangs erwähnten Art vorzuschlagen, bei der eine Kompensation der temperatur- und alterungsbedingten Veränderungen gegeben ist.

Erfindungsgemäß wird dies dadurch erreicht, daß ein Referenzschwinger vorgesehen ist, der mit dem Meßschwinger in thermischem Kontakt steht, wobei der Referenzschwinger ebenfalls über Wandler und Erreger in seiner mechanischen Resonanzfrequenz anregbar ist und ein weiteres periodisches Signal abgibt, das in seiner Periode mit der Periode des Referenzschwingers oder einem Vielfachen davon übereinstimmt.

Durch diese Maßnahmen ist sichergestellt, daß sich temperatur- und alterungsbedingte Änderungen auf beide Schwinger gleich auswirken. Durch einen Vergleich der Resonanzschwingung des Meß- und Referenzschwingers können die temperatur- und alterungsbedingten Abweichungen der Meßergebnisse des Meßschwingers kompensiert werden.

Nach einem weiteren Merkmal der Erfindung kann vorgesehen sein, daß der Meßschwinger und der Referenzschwinger aus dem selben Material hergestellt sind.

Durch diese Maßnahmen wird erreicht, daß Temperaturänderungen und die Alterung beide Schwinger gleich betreffen. Dadurch wird eine einfache Auswertung der Meßergebnisse ermöglicht. So kann in einem solchen Fall durch eine einfache Quotientenbildung der Frequenzen der beiden Schwinger ein temperaturunabhängiger und zeitlich stabiler Wert erhalten werden, da sich die Frequenzänderung durch den Temperatureinfluß und die Alterung des Schwingermaterials kürzt. Zum Zweck der Dichtemessung wird nur der Meßschwinger mit dem Präparat gefüllt, wogegen der Referenzschwinger mit einem Medium konstanter Dichte gefüllt bzw. evakuiert bleibt. Die Dichte wird dabei in bekannter Weise über eine modifizierte Schwingungsgleichung aus den Quotienten der beiden Frequenzen errechnet.

$$\omega_1{}^2 = \frac{c_1 . f(\vartheta, t)}{M + V(1 + 3\alpha\vartheta)}$$

$$\omega_2{}^2 = \frac{c_2 . f(\vartheta, t)}{m}$$

$$Q_2 = \frac{\omega_2{}^2}{\omega_1{}^2} = \frac{c_2}{c_1 . m}(M + \rho V(1 + 3\alpha\vartheta))$$

wobei :

| | | |
|---|---|---|
| $\omega_1$ | ............ | Kreisfrequenz des Meßschwingers |
| $\omega_2$ | ............ | Kreisfrequenz des Referenzschwingers |
| $c_1$ | ............ | Federkonstante des Meßschwingers |
| $c_2$ | ............ | Federkonstante des Referenzschwingers |
| M | ............ | Masse des leeren Meßschwingers |
| V | ............ | Volumen des Präparates im Meßschwinger |
| $\alpha$ | ............ | Ausdehnungskoeffizient des Meßschwingermaterials |
| m | ............ | Masse des Referenzschwingers |
| $\vartheta$ | ............ | Temperarur der Meßanordnung |
| t | ............ | Zeit |
| $f(\vartheta, t)$ | ............ | Zeit- und Temperarurabhängigkeit der elastischen Eigenschaften des Werkstoffes beider Schwinger |
| Q | ............ | Quotient der Kreisfrequenzen $\omega_2/\omega_1$ |
| $\rho$ | ............ | Dichte des Präparates |

Nach Umformen und Einführung der Konstanten A und B ist die gemessene Dichte bei der Temperatur $\vartheta$:

$$\rho = (A.Q^2 - B).(1 - 3\alpha\vartheta)$$

Wenn der Meß- und Referenzschwinger als Rohre ausgebildet sind und mit ähnlichen Flüssigkeiten gefüllt sind, z.B. Lösung und Lösungsmittel wird nur der Dichteunterschied den Quotienten beeinflussen, wodurch eine äußerst empfindliche Dichtedifferenzmessung erzielt wird.

Nach einem weiteren Merkmal der Erfindung kann vorgesehen sein, daß sich die Resonanzfrequenz des Referenzschwingers von der des Meßschwingers wesentlich - vorzugsweise um den Faktor 2 - unterscheidet. Insbesondere weist der Referenzschwinger eine höhere Eigenfrequenz als der Meßschwinger auf, um Koppelschwingungen mit dem Meßschwinger zu vermeiden. Dies wird dadurch erreicht, daß der Referenzschwinger kürzer gebaut wird. Vorteilhafterweise um ca. 40 %, um eine doppelt so hohe Eigenfrequenz wie der Meßschwinger zu erreichen.

Weiters kann vorgesehen sein, daß die beiden Schwinger in einem gemeinsamen Gehäuse angeordnet sind.

Auf diese Weise wird eine sehr gute thermische Kopplung zwischen dem Meß- und dem Referenzschwinger sichergestellt. Weiters kann vorgesehen sein, daß das Gehäuse an seinem einen Ende an einer Gegenmasse aufliegt und an seinem anderen Ende an einem Erreger, z.B. einem Piezoelement, anliegt.

Auf diese Weise können die beiden Schwinger mit nur einem Erreger angeregt werden.

Weiters kann vorgesehen sein, daß der Erreger über einen Summierverstärker angesteuert ist, an dessen Eingängen die an den Schwingern angeordneten Wandler, vorzugsweise magnetdynamische oder optoelektrische Wandler, über Erregerverstärker angeschlossen sind, wobei jeder Wandler mit einem ihm zugeordneten Frequenzzähler in Verbindung steht, wobei die Frequenzzähler ausgangsseitig mit einem Rechenwerk verbunden sind, das den Quotienten aus den beiden gemessenen Frequenzen ermittelt. Auf diese Weise ergibt sich ein sehr einfacher Aufbau der Ansteuerung der erfindungsgemäßen Einrichtung.

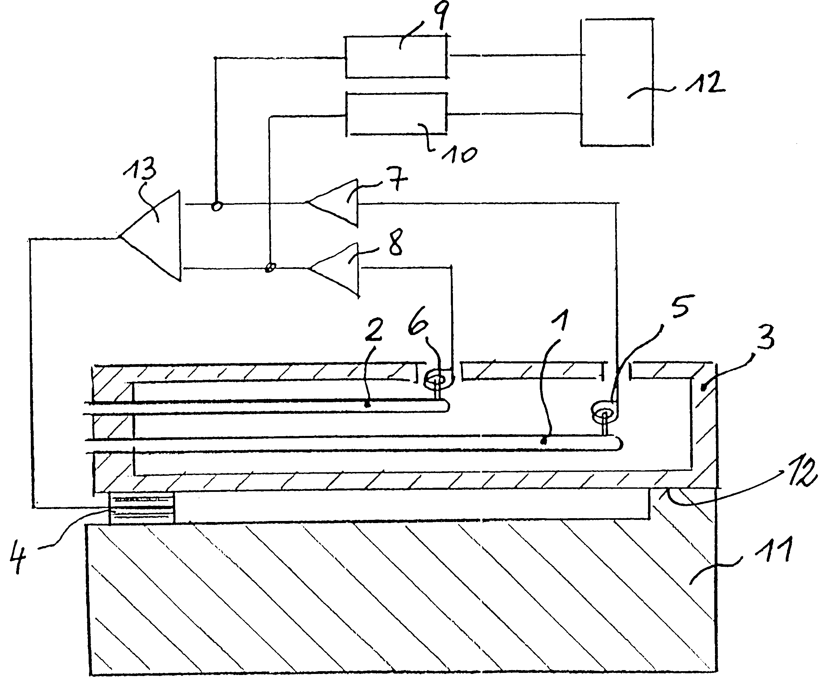

Die Erfindung wird nun anhand der Zeichnung näher erläutert, die schematisch eine erfindungsgemäße Vorrichtung zeigt.

Auf einer Gegenmasse 11 liegt ein Gehäuse 3 auf einem Auflager 12 der Gegenmasse mit einem Ende auf. Das andere Ende des Gehäuses 3 liegt auf einem Erreger 4, der durch ein Piezoelement gebildet ist, auf, der seinerseits auf der Gegenmasse 11 aufliegt.

Dieser Erreger 4 ist von einem Summierverstärker 13 beaufschlagt.

In dem Gehäuse 3 ist ein Meßschwinger 1 gehalten, der mit einem Präparat gefüllt ist, dessen Dichte zu bestimmen ist.

Weiters ist in dem Gehäuse 3 ein Referenzschwinger 2 gehalten, der ca. 40 % kürzer als der Meßschwinger 1 ausgebildet ist und der mit einem hinsichtlich seiner Dichte konstanten Medium gefüllt oder besser noch evakuiert ist.

Auf diesen beiden Schwingern 1 und 2 sind magnetdynamische Wandler 5, 6 bestehend aus einem am Schwinger befestigten Permanentmagneten und im Gehäuse angebrachten Spulen angeordnet, die die Schwingungen der Schwinger 1, 2 in entsprechende elektrische Signale umwandeln.

Diese Wandler 5, 6 sind über entsprechende Erregerverstärker 7, 8 mit den Eingängen des Summierverstärkers 13 verbunden. Weiters sind die Ausgänge der Erregerverstärker 7, 8 mit je einem Frequenzzähler 9, 10 verbunden, die ihrerseits mit einem Rechenwerk 12 verbunden sind, das den Quotienten aus den ermittelten Frequenzen der Schwingungen der beiden Schwinger 1, 2 errechnet und aus diesem Wert nach der bereits oben angegebenen Gleichung die Dichte des Präparates des Meßschwingers 1 ermittelt.

## Patentansprüche

1.  Vorrichtung zur Bestimmung der Dichte von Flüssigkeiten und Gasen aus der Periodendauer eines mit einem Präparat gefüllten Meßschwingers (1), zu dessen Anregung ein Erregerverstärker (7) vorgesehen ist, der den Meßschwinger (1) in seiner mechanischen Resonanzfrequenz über einen Wandler (5) und Erreger (4) anregt und der ein periodisches elektrisches Signal abgibt, welches in seiner Periode mit der Periode des Meßschwingers (1) oder einem Vielfachen davon übereinstimmt, **dadurch gekennzeichnet**, daß ein Referenzschwinger (2) vorgesehen ist, der mit dem Meßschwinger (1) in thermischem Kontakt steht, wobei der Referenzschwinger (2) ebenfalls über einen Wandler (6) und Erreger (4) in seiner mechanischen Resonanzfrequenz anregbar ist und ein weiteres periodisches Signal abgibt, das in seiner Periode mit der Periode des Referenzschwingers (2) oder einem Vielfachen davon übereinstimmt.

2.  Vorrichtung nach Anspruch 1, **dadurch gekennzeichnet**, daß der Meßschwinger (1) und der Referenzschwinger (2) aus dem selben Material hergestellt sind.

3.  Vorrichtung nach Anspruch 1 und 2, **dadurch gekennzeichnet**, daß sich die Resonanzfrequenz des Referenzschwingers von der des Meßschwingers wesentlich - vorzugsweise um den Faktor 2 - unterscheidet.

4. Vorrichtung nach einem der Ansprüche 1 bis 3, **dadurch gekennzeichnet**, daß die beiden Schwinger (1, 2) in einem gemeinsamen Gehäuse (3) angeordnet sind.

5. Vorrichtung nach einem der Ansprüche 1 bis 4, **dadurch gekennzeichnet**, daß das Gehäuse (3) an seinem einen Ende an einer Gegenmasse (11) aufliegt und an seinem anderen Ende an einem Erreger (4), z.B. einem Piezoelement, anliegt.

6. Vorrichtung nach einem der Ansprüche 1 bis 5, **dadurch gekennzeichnet**, daß der Erreger (4) über einen Summierverstärker (13) angesteuert ist, an dessen Eingängen die an den Schwingern (1, 2) angeordneten Wandler (5, 6), vorzugsweise magnetdynamische oder opto-elektrische Wandler, über Erregerverstärker (7, 8) angeschlossen sind, wobei jeder Wandler (5, 6) mit einem ihm zugeordneten Frequenzzähler (9, 10) in Verbindung steht, wobei die Frequenzzähler ausgangsseitig mit einem Rechenwerk (12) verbunden sind, das den Quotienten aus den beiden gemessenen Frequenzen ermittelt.

**Europäisches Patentamt**

# EUROPÄISCHER RECHERCHENBERICHT

Nummer der Anmeldung

EP 92 89 0205

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 729 982 (O. SENDA)<br>* Spalte 4, Zeile 15 - Spalte 5, Zeile 10; Abbildungen 3,6 *<br>--- | 1,2,4 | G01N9/00 |
| X | US-A-5 005 400 (H.S. LEW)<br>* Spalte 5, Zeile 31 - Zeile 39 *<br>--- | 1,3,4 | |
| X | PATENT ABSTRACTS OF JAPAN<br>vol. 1, no. 104 (E-044)14. September 1977<br>& JP-A-52 037 488 ( NIPPON GOSEI GOMU )<br>23. März 1977 | 1,2,4 | |
| A | * Zusammenfassung *<br>--- | 5,6 | |
| A | US-A-3 934 127 (G.L. SCHLATTER ET AL.)<br>* Spalte 8, Zeile 5 - Spalte 9, Zeile 54; Abbildung 4 *<br>--- | 1,2,4-6 | |
| P,A | EP-A-0 487 498 (DR H. STABINGER)<br>27. Mai 1992<br>* das ganze Dokument *<br>--- | 1,5,6 | |
| A | US-A-4 838 084 (H. LEOPOLD ET AL.)<br>--- | | RECHERCHIERTE SACHGEBIETE (Int. Cl.5) |
| A | DE-A-2 847 626 (O. KRATKY ET AL.) | | G01N |
| D,A | & AT-A-356 943 (IDEM)<br><br>----- | | |

Der vorliegende Recherchenbericht wurde für alle Patentansprüche erstellt

| Recherchenort | Abschlußdatum der Recherche | Prüfer |
|---|---|---|
| DEN HAAG | 08 JANUAR 1993 | HODSON C.M. |

EPO FORM 1503 03.82 (P0403)

### KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument